# EUROPEAN PATENT APPLICATION

(11) **EP 1 603 258 A2**
(43) Date of publication of application: **07.12.2005**
(21) Application number: 05104856.9
(22) Date of filing: 03.06.2005
(51) Int. Cl.: H04H 1/00

(54) **Digital multimedia broadcasting receiver and a channel display method**

(30) Priority: 04.06.2004 KR 2004040881
(71) Applicant: SAMSUNG ELECTRONICS CO., LTD., Suwon-si, Gyeonggi-Do 442-742 (KR)
(72) Inventor: Oh, Ui-taek, 824-1105 8 danji APT, Gyeonggi-Do (KR)
(74) Representative: Read, Matthew Charles

(57) **Abstract**

A digital multimedia broadcasting (DMB) receiver allows a user to easily identify channels of a broadcast signal including a plurality of programs for a carrier frequency and display information about the programs in a hierarchical structure. The digital multimedia broadcasting (DMB) receiver includes a tuner (100) that receives a broadcast signal including a plurality of programs for a predetermined carrier frequency, a demodulating unit (200) that demodulates the received broadcast signal to obtain channel information and program information, and a control unit (300) that displays programs for a carrier frequency in a hierarchical format using a predetermined interface (Fig. 4, 6), displayed by video output unit (700).

## Description

The present invention relates to a digital multimedia broadcasting receiver and a channel display method using same.

Digital multimedia broadcasting (DMB) is similar to digital audio broadcasting (DAB), and provides a user with broadcasting services that provide a plurality of programs in each individual carrier frequency DMB services are typically broadcast through a satellite transponder or a terrestrial repeater to enable users, who may be moving e.g., walking or traveling in a vehicle, to receive multimedia broadcasting i.e. video or audio via multi-channels using portable or car-mounted receivers having omni-directional reception antennas. Terrestrial DMB has also been proposed.

Thus, DMB provides a mobile service differentiated from existing non-mobile reception radio broadcasting techniques. Channels in the L-band (1452 -1492MHz) or S-band (2310 - 2360MHz/2535 - 2655MHz) are utilized for DMB.

A DMB signal can be received directly from terrestrial transmitters, or from a satellite in most terrestrial areas or by means of gap fillers in areas beyond line of sight satellite coverage. DMB services include multi-channel video and audio broadcasting, together with traffic, weather and global positioning system (GPS) information.

In DMB, an ensemble of programs is included in each predetermined carrier frequency, and so to select a service, the user first selects a carrier frequency and then selects one of the plurality of programs for the selected carrier frequency. Thus, when the user searches for a program of interest, he or she needs to know which programs are included in the corresponding carrier frequency However, it is not feasible for the user to memorize all the programs associated with so many channels. Accordingly, it is desirable to be able to identify easily every channel of a received broadcast signal.

Japanese published application No. 2000-216693 discloses a digital broadcasting receiver in which when a user requests service names to be displayed collectively, services in ensembles that are currently being selected and received, are sorted by a service identification (ID), and service names corresponding to the IDs are displayed on a display device in order. However, in this digital broadcasting receiver, the service names corresponding to the service IDs are collectively displayed regardless of user preference, and it is difficult for the user to select a desired program.

Accordingly, it is an aspect of the present invention to provide a digital multimedia broadcasting (DMB) receiver that displays a plurality of programs included in a predetermined carrier frequency, in a hierarchical format having channel information and program information, and a channel display method using the DMB receiver.

The foregoing and/or other aspects of the present invention are achieved by providing a digital multimedia broadcasting (DMB) receiver including a tuner, a demodulating unit, and a control unit. The tuner receives a broadcast signal including a plurality of programs in a predetermined carrier frequency The demodulating unit demodulates the received broadcast signal to obtain channel information and program information. The control unit displays programs for each carrier frequency in a hierarchical format using a predetermined interface.

In another aspect the present invention provides a digital multimedia broadcasting (DMB) receiver including a tuner to receive a broadcast signal including a plurality of programs for a predetermined carrier frequency, a demodulating unit to demodulate the received broadcast signal to obtain channel information and program types, and a control unit to display programs for each program type in a hierarchical format using a predetermined interface.

The invention also provides a channel display method using a digital multimedia broadcasting receiver, the method including receiving a broadcast signal including a plurality of programs for a predetermined carrier frequency, demodulating the received broadcast signal to obtain channel information and program types, and displaying programs for a carrier frequency in a hierarchical format using a predetermined interface.

The invention also provides a channel display method using a digital multimedia broadcasting receiver, the method including receiving a broadcast signal including a plurality of programs in a predetermined carrier frequency, demodulating the received broadcast signal to obtain channel information and program types, and displaying programs for each program type in a hierarchical format using a predetermined interface.

Features and advantages of the present invention will become more apparent and more readily appreciated from the following description of the embodiments thereof given by way of illustrative example with reference to the accompanying drawings in which:
Figure 1 is a block diagram of a digital multimedia broadcasting (DMB) receiver in accordance with the invention;
Figure 2 illustrates the structure of a DMB broadcast signal;
Figure 3 is a flowchart illustrating a channel display method performed by the DMB receiver;
Figure 4 illustrates a display of channel information on a user interface, produced by the method of Figure 3;
Figure 5 is a flowchart illustrating an alternative channel display method performed by the DMB receiver;
Figure 6 illustrates the display of channel information on an alternative user interface, produced by the method of Figure 5; and
Figure 7 is a flowchart illustrating a channel display method performed for the interface of Figure 6.

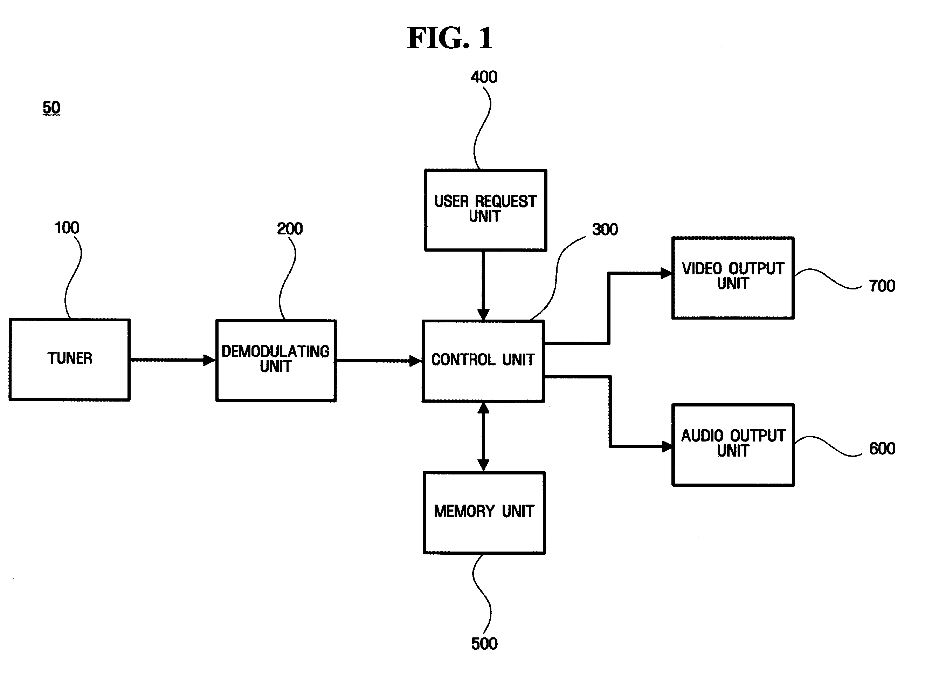

In Fig. 1 a digital multimedia broadcasting (DMB) receiver 50 comprises a tuner 100 that receives a broadcast signal (not shown) including a plurality of programs, a demodulating unit 200 that demodulates the received broadcast signal to obtain channel information and program types, and a control unit 300 that uses a predetermined interface (not shown) to display programs for the carrier frequencies in a hierarchical format according to the channel information and program types.

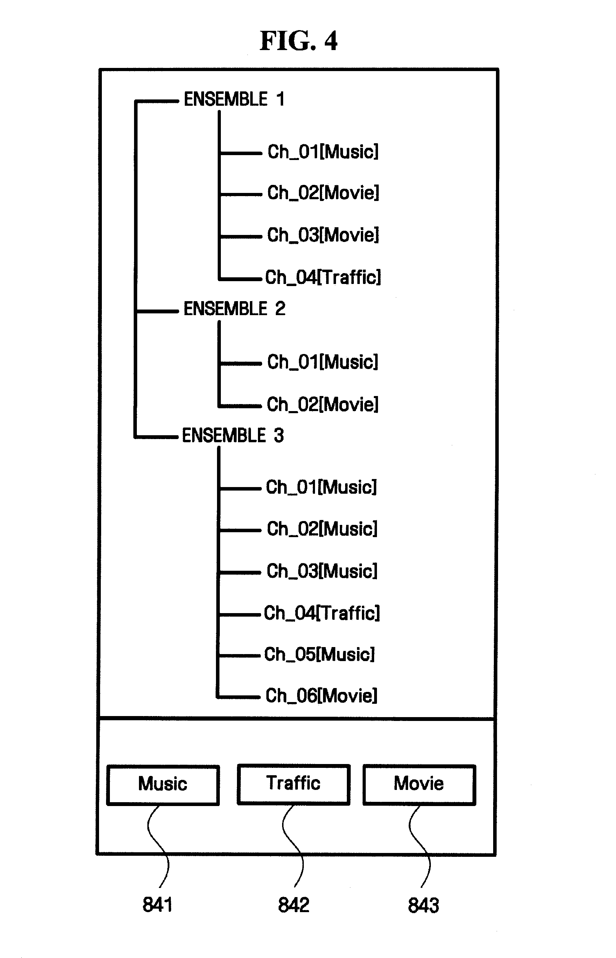

The DMB receiver 50 further comprises a user request unit 400 through which a user requests channel information and program types of the received broadcast signal, a memory unit 500 that stores an interface, see Figure 4 as an example, for displaying programs for each carrier frequency, and an audio output unit 600 and a video output unit 700 that output the broadcast signal that has been demodulated by the demodulating unit 200. The interface is displayed to the user through the video output unit 700.

The transmitted, multi-channel data associated with an individual carrier frequency will be referred to as an "ensemble" hereinafter, and the plurality of programs for each carrier frequency will also be referred to collectively as "services".

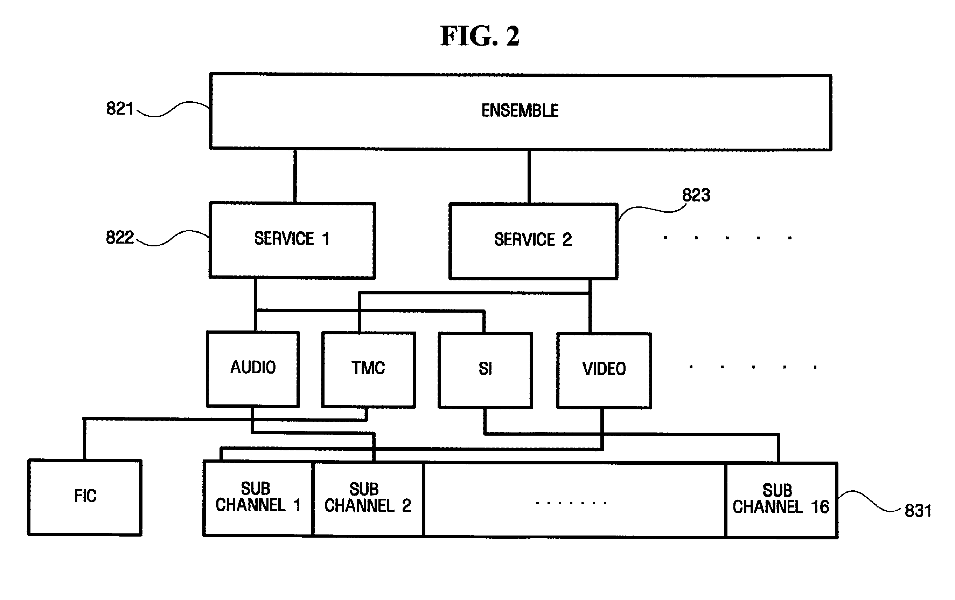

Figure 2 illustrates schematically the data architecture of a DMB broadcast signal. The broadcast signal received by the tuner 100 can be categorized into main service components and sub service components. The main service components include a video signal and an audio signal, and the sub service components include a traffic message channel (TMC) and service information (SI).

In DMB 50, the main service components and the sub service components are transmitted thereto in at least 16 channels 831 associated with an individual carrier frequency. The main service components and the SI are transmitted via the channels 831, but the TMC is transmitted via a fast information data channel (FIDC) included in a separate fast information channel (FIC).

The plurality of services 822 and 823 included in an ensemble 821 may comprise a single main service component and a single sub service component. Referring to Figures 1 and 2 for example, the demodulating unit 200 obtains channel information for the channels that comprise each ensemble such as ensemble 821 received by the tuner 100 together with the program types for the plurality of services 822 and 823 included in the received ensembles.

Here, the channel information of the ensemble 821 may be predefined or channels may be sequentially designated to frequency bands for the ensemble 821.

The control unit 300 provides output signals corresponding to a display of the ensemble 821, in which program information corresponding to the plurality of services 822 and 823, can be displayed by display unit 700 in a hierarchical ensemble structure, through the predetermined interface.

The ensemble 821 and services 822 and 823 displayed through the predetermined interface thus comprise information on a plurality of channels and programs.

The control unit 300 may display ensembles and services through the interface according to user-selected program information under the control of the user request unit 400. In other words, ensembles and services may be displayed in a hierarchical format for predetermined program information.

To this end, the request unit 400 allows the user to select predefined channel information and in response to the selection, the control unit 300 provides a display on unit 700 of services corresponding to this program information.

For example, when the user selects 'Movie' as program information with control button 843, the control unit 300 provides a display of services corresponding to this category of program information in a hierarchical format.

In addition to the user-selected program information, the control unit 300 may also display services in a hierarchical format with respect to default program information.

These ways of displaying services may be used together in some cases. For example, a plurality of services for each ensemble are displayed in a hierarchical format according to a user's request when a broadcast signal is first received, and then a plurality of services for each type of program information are then displayed in a hierarchical format according to user's selection.

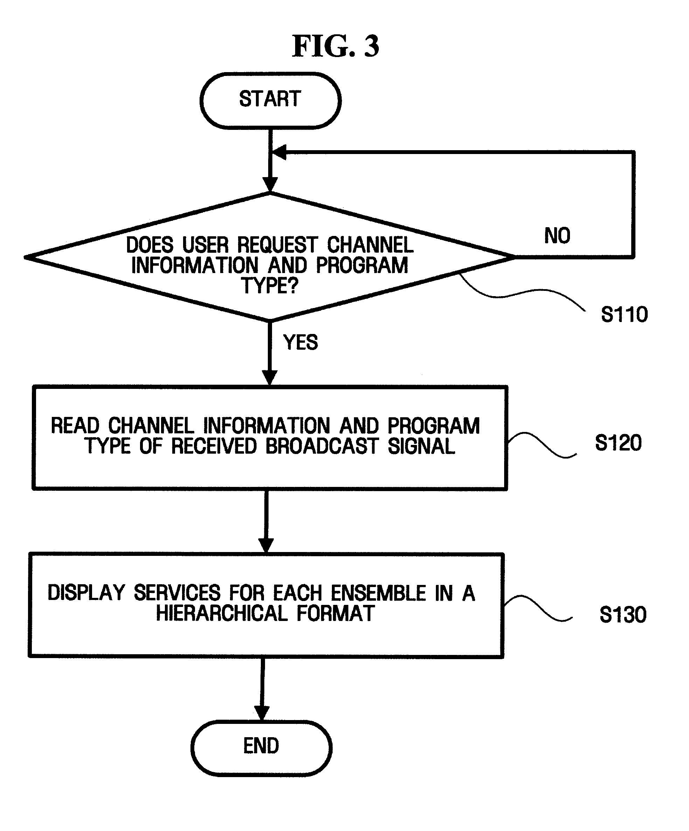

A channel display method using the DMB receiver will now be described with reference to Figure 3. In step S110, the control unit 300 determines whether a user requests channel information and program types of for a received broadcast signal through the user request unit 400.

When the user requests the channel information and the program information in step S110, the process moves to step S120, where the demodulating unit 200 demodulates the broadcast signal received by the tuner 100 under the control of the control unit 300 to obtain the channel information and the program information of the received broadcast signal.

The process then moves from operation S120 to step S130, where the control unit 300 displays the channel information and program types for each ensemble in a hierarchical format through the interface, using display unit 700.

As shown in Figure 4, the interface may display a plurality of channels and program types. For example, ensemble 1 shown in Figure 4 comprises four channels: Ch_01, Ch_02, Ch_03, and Ch_04, and the program/service types: Music, Movie, Movie, and Traffic corresponding to these channels. The program/service types for ensemble 2 and ensemble 3 are correspondingly displayed. The hierarchical display includes a root with branches corresponding to the ensembles, with sub-branches that denote the services from the ensembles that correspond to the program types or categories chosen by the user through operation of the user request unit 400.

The user may display services, in a hierarchical format according to an individual program type, using program information buttons 841, 842, and 843 included in the interface. Alternatively, the control unit 300 may provide a display of a plurality of services , in a hierarchical format according to program information, at a user's request, rather than for each ensemble.

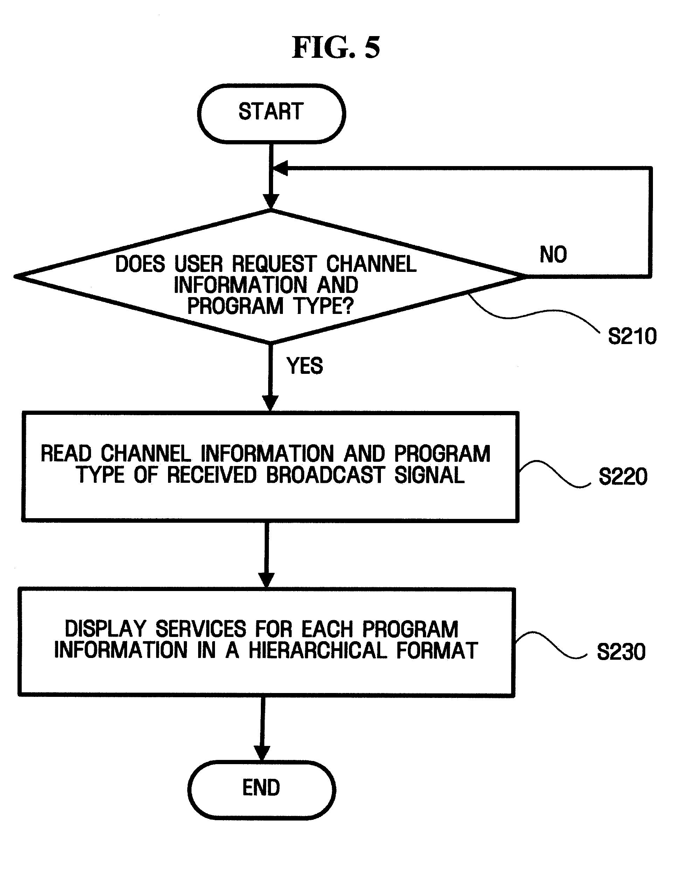

Figure 5 is a flowchart illustrating an alternative channel display method using a DMB receiver. In step S210, the control unit 300 determines when a user requests channel information and program types of a received broadcast signal through the user request unit 400. When the user requests the channel information and the program information in step S210, the process moves to step S220, in which the demodulating unit 200 demodulates the broadcast signal received by the tuner 100 under the control of the control unit 300 to obtain the channel information and the program information. The control unit 300 then displays channels and program types in a hierarchical format through the interface, by means of the display unit 700.

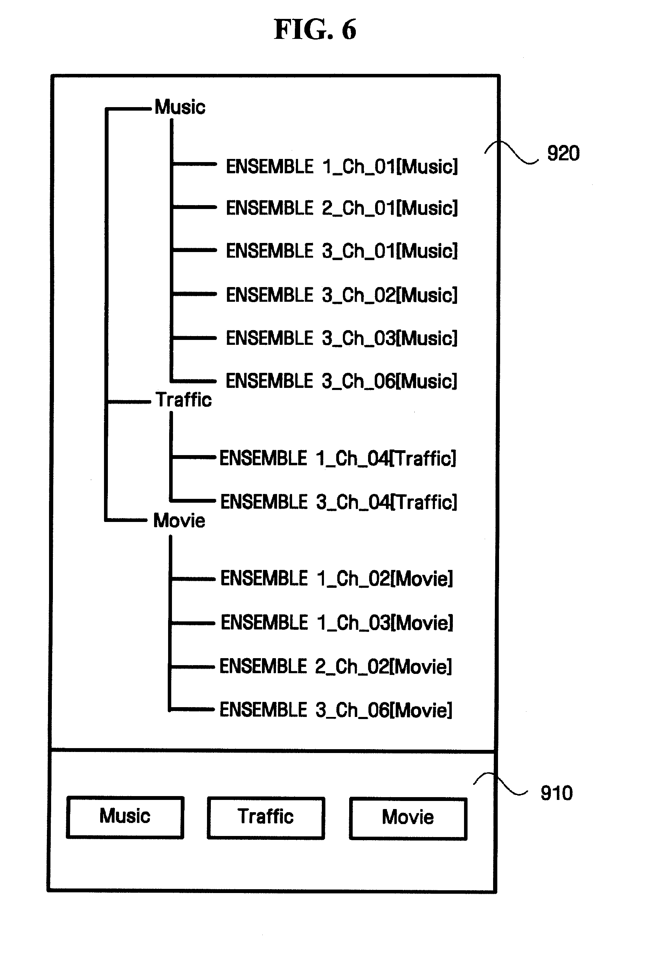

As shown in Figure 6, the display provided by the interface may comprise a first portion 910 that allows the user to select a program type, and a second portion 920 where a plurality of services corresponding to the program type is displayed in a hierarchical format with respect to the selected program type.

In addition, the control unit 300 may display a plurality of services in a hierarchical format with respect to default program information.

The services displayed in the second portion 920 may comprise channel information and program types and channel information of the ensembles. For example, services corresponding to the program type 'Music' may be displayed as: 'Ensemble number_Channel information [Program type]'; for example, Ensemble 1_Ch_01 [Music]', as shown in Figure. 6.

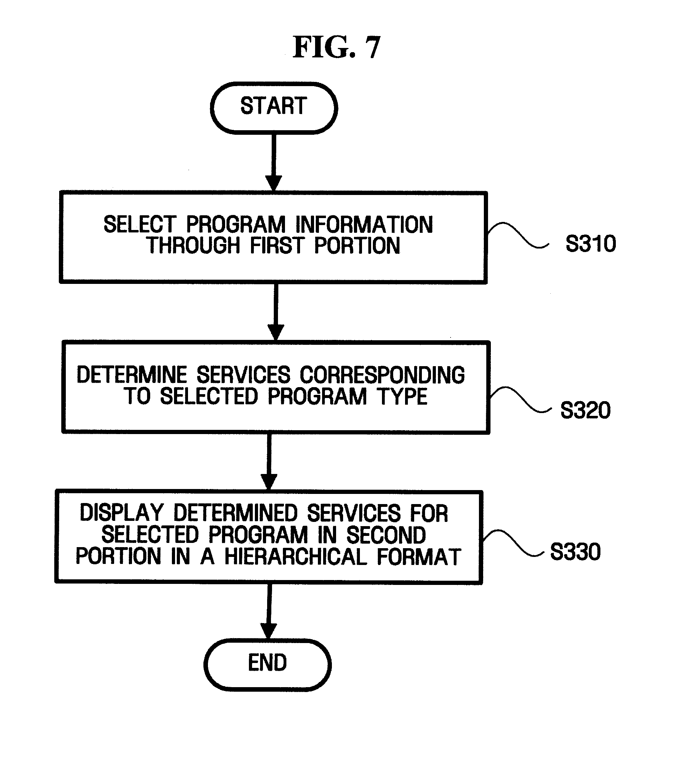

A channel display method for displaying services in a hierarchical format with respect to program type and using the interface of Figure 6 will be described now with reference to Figure 7. In step S310, a user selects a program type through the first portion 910. The process moves from step S310 to step S320, where the control unit 300 determines services corresponding to the selected program type. Here, the control unit 300 may obtain services corresponding to a default program type in addition to the user's selected program type.

The process then moves to step S330, where the determined services are displayed in a hierarchical format with respect to the selected program type using the channel information and program types of the determined services and the channel information of the ensembles. As an alternative, the interface shown in Figure 4 may be used in some cases. For example, when the user displays a plurality of services corresponding to a program type selected using a program information button 841, 842, 843 in the interface of Figure 4, the services may be displayed as shown in Figure 6. From the foregoing examples, it will be understood that according to the invention, ensembles and services of the broadcast signals are displayed in the form of hierarchical structures, such that a very user-friendly interface is created which allows users to recognize available channels at a glance.

## Claims

**1.** A digital multimedia broadcasting (DMB) receiver comprising:
a tuner (100) to receive a DMB broadcast signal including a plurality of programs;
a demodulating unit (200) to demodulate the received broadcast signal to obtain channel information and program information for the programs; and
a control unit (300) to provide an output corresponding to an informational display for the programs,
**characterized in that** the display is in a hierarchical format.

**2.** The digital multimedia broadcasting receiver of claim 1, wherein the control unit (300) provides said output for display as a predetermined interface that comprises a hierarchical display of channel information and program information.

**3.** The digital multimedia broadcasting receiver of claim 2, wherein the control unit (300) provides an output corresponding to a display a plurality of programs corresponding to predetermined program information in a hierarchical format with respect to the predetermined program information.

**4.** The digital multimedia broadcasting receiver of claim 2 or 3, wherein the interface further comprises a plurality of program information buttons (841, 842, 843) that allow a user to select the predetermined program information.

**5.** The digital multimedia broadcasting receiver of claim 4, wherein the plurality of programs corresponding to the predetermined program information selected by the user are displayed in a hierarchical format according to the user's selection when the broadcast signal is received.

**6.** The digital multimedia broadcasting receiver of any preceding claim wherein the control unit (300) provides said output for display as a predetermined interface that comprises a hierarchical display for each program type in a hierarchical format.

**7.** The digital multimedia broadcasting receiver of claim 6, wherein the predetermined interface comprises a first portion (910) that allows a user to select predetermined program information and a second portion (920) where programs corresponding to the predetermined program information selected by the user are displayed.

**8.** The digital multimedia broadcasting receiver of claim 7, wherein channel information and program information are displayed in the second portion.

**9.** The digital multimedia broadcasting receiver of any preceding claim including a video output unit (700) to provide a display corresponding to the output of the control unit (300).

**9.** A channel display method using a digital multimedia broadcasting receiver comprising:
receiving a broadcast signal including a plurality of programs for a predetermined carrier frequency;
demodulating the received broadcast signal to obtain channel information and program information; and
displaying programs for a carrier frequency
**characterized in that** the display is in a hierarchical format using a predetermined interface.

**10.** The channel display method of claim 9, wherein the interface includes channel information and program information.

**11.** The channel display method of claim 10, further comprising displaying a plurality of programs for each program type in a hierarchical format.

**12.** The channel display method of claim 11, wherein the interface further comprises a plurality of program information buttons and selecting program information with one of the buttons.

**13.** A channel display method using a digital multimedia broadcasting receiver comprising:
receiving a broadcast signal including a plurality of programs for a predetermined carrier frequency;
demodulating the received broadcast signal to obtain channel information and program types; and
displaying programs for each program type in a hierarchical format using a predetermined interface.

**14.** The channel display method of claim 13, wherein the interface includes a first portion that allows a user to select predetermined program information and a second portion where programs corresponding to the predetermined program information are displayed.

**15.** The channel display method of claim 14, wherein channel information and program types are displayed in the second portion.
